# EUROPÄISCHE PATENTSCHRIFT

(11) **EP 1 407 990 B1**
(45) Veröffentlichungstag und Bekanntmachung des Hinweises auf die Patenterteilung: **14.06.2006**
(21) Anmeldenummer: 03450223.7
(22) Anmeldetag: 03.10.2003
(51) Int. Cl.: B65G 47/252

(54) **Wendevorrichtung**
Turning device
Dispositif de retournement

(30) Priorität: 07.10.2002 AT 15192002
(43) Veröffentlichungstag der Anmeldung: 14.04.2004
(73) Patentinhaber: Springer Maschinenfabrik AG, 9360 Friesach (AT)
(72) Erfinder: Roth, Heinz, 9360 Friesach (AT); Wohlfart, Peter, 9300 St.Veit/Glan (AT)
(74) Vertreter: Gibler, Ferdinand

(56) Entgegenhaltungen:
- JP-A- 53 013 775
- US-A- 3 306 427
- US-B1- 6 446 785

## Beschreibung

Die Erfindung betrifft eine Wendevorrichtung für längliches Stückgut, insbesondere Holzbretter, Holzbalken od. dgl., mit einer antreibbaren Welle und wenigstens zwei mit der Welle drehfest verbundenen Scheiben, wobei jede der Scheiben wenigstens eine eine Aufnahmeseite und eine Abgabeseite aufweisende randoffene Ausnehmung für die Aufnahme und/oder Abgabe des Stückgutes aufweist und in zumindest einer der randoffenen Ausnehmungen ein Anschlagelement vorgesehen ist.

Derartige Wendevorrichtungen werden insbesondere in Verbindung mit einer Transporteinrichtung für das längliche Stückgut im Quertransport eingesetzt, wobei das Stückggut von der Transporteinrichtung in die randoffene Ausnehmung gebracht wird und von dieser nach einer Drehung der Welle um einen vorgebbaren Winkel wieder aus der Ausnehmung aufgenommen wird. Dabei ist es üblich, die Transporteinrichtung und die Welle kontinuierlich anzutreiben.

Eine derartige Wendevorrichtung ist etwa aus der US 6 446 785 B1 bekannt. Diese beschreibt eine Wendevorrichtung für Holzbretter oder dgl. mit auf einer Welle angeordneten und von dieser angetriebenen Armen, wobei die Arme Anschläge aufweisen. Das Transportgut wird auf einer Förderkette transportiert, wobei das ankommende Transportgut durch einen Arm bzw. durch ein Paar Arme erfasst, durch die Drehung umgedreht und wieder an die Förderkette abgegeben bzw. auf diese abgeworfen wird

Nachteilig an diesen bekannten Wendevorrichtungen ist, daß ein Betrieb, bei dem das Stückgut zuverlässig gewendet wird, nur bei geringen Drehzahlen der Welle sichergestellt werden kann, wodurch ein nur geringer Durchsatz mit diesen Wendevorrichtungen erzielt werden kann, wobei insbesondere bei breiten und/oder dicken Stückgütern das Wenden nicht sichergestellt werden kann.

Die JP 53 013775 A beschreibt eine weitere Wendevorrichtung zum Wenden von Metallprofilen. Das Wendegut wird in drehbaren Scheiben mit zwei Ausnehmungen aufgenommen. In den Ausnehmungen sind abgewinkelte, drehbar gelagerte Schwenkelemente vorgesehen, die mit dem Transportgut in Wechselwirkung treten.

Nachteilig an einer Wendevorrichtung gemäß der JP 53 013775 A ist, dass damit nur eine einzige Art von Wendegut sicher und ohne Beschädigung des Wendegutes und/oder der Vorrichtung gewendet werden kann, da der Anschlag/Niederhalter gemäß der JP 53 013775 A nur bei bestimmten Wendegutabmessungen funktionsfähig ist und das Wendegut sicher festhält. Bei zu kleinem Wendegut ist der Niederhalter wirkungslos und es kann daher leicht zu einer Beschädigung des Wendeguts kommen. Bedingt durch die sehr schmalen Aufnahmen für Wendegut kann großes Wendegut nicht in die Aufnahmen eingeführt und somit auch nicht gewendet werden.

Bei einer Wendevorrichtung gemäß der JP 53 013775 A sind randoffene Ausnehmungen notwendig, welche die Form eines Schlitzes mit nahezu parallelen Flächen aufweisen müssen. Dieser Schlitzt muss dabei größer als das Wendegut sein, da dieses ansonsten nicht in die Aufnahme passt. Bedingt durch den bei der JP 53 013775 A wesentlichen Niederhalter kann der Schlitz nicht hin zu einem größeren Öffnungswinkel vergrößert werden, da dann der nötige Druck des Niederhalters nicht erbracht werden kann. Daher muss bei einer Wendevorrichtung gemäß der JP 53 013775 A die randoffene Ausnehmung in Relation zu den Abmessungen des Wendeguts sehr groß sein, was bei gegebenen Abmessungen des Wendeguts zu sehr großen Durchmessern der notwenigen drehenden Scheiben führt.

Eine Wendevorrichtung gemäß der JP 53 013775 A ist daher vor allem äußerst groß im Bezug auf das wendbare Wendegut und äußerst unflexibel in der Art des wendbaren Wendeguts und daher nur sehr eingeschränkt verwendbar.

Aufgabe der Erfindung ist es daher eine Wendevorrichtung der eingangs beschriebenen Art anzugeben, bei der das Wenden von unterschiedlichen Stückgütern sichergestellt wird. Eine weitere Aufgabe der Erfindung ist es, eine Wendevorrichtung der eingangs genannten Art anzugeben, mit der ein höherer Durchsatz erreichbar ist.

Erfindungsgemäß wird dies dadurch erreicht, dass das Anschlagelement um eine zur Achse der Welle im wesentlichen parallelen Kippachse gegenüber der Scheibe verschwenkbar ist, wobei das Anschlagelement, bei einer Drehung der Wendevorrichtung um die Achse der Welle, das Kippen des Stückguts um die Kippachse, durch eine Bewegung des Massenmittelpunktes des Stückgutes in Richtung der Achse der Welle, gewährleistet.

Dadurch kann die Führung des länglichen Stückgutes während der Kippbewegung verbessert werden. Dadurch ergibt sich der Vorteil, daß das längliche Stückgut bei der Aufnahme in der randoffenen Ausnehmung an dem Anschlagelement anstößt, wobei das längliche Stückgut auf der Aufnahmeseite aufliegt und durch das Anschlagelement die Kippbewegung des Stückgutes zur Abgabeseite während der Drehung der Scheiben geführt ist. Bei der Abgabe des Stückgutes liegt dieses auf der Abgabeseite der randoffenen Ausnehmung auf. Durch das die Führung der Kippbewegung des länglichen Stückgutes während der Drehung der Scheiben bewirkende Anschlagelement wird auch bei höheren Drehzahlen ein zuverlässiges Wenden der länglichen Stückgüter sichergestellt, wobei auch die Führung der Kippbewegung von breiten und/oder dicken Stückgüter sichergestellt ist. Ein die Kippbewegung bewirkender Abstand zwischen der Aufnahmeseite und der Abgabeseite der randoffenen Ausnehmung ist erforderlich, um während der Drehung der Scheiben die Aufnahme und/oder die Abgabe von länglichen Stückgütern und/oder um das Wenden von Stückgütern unterschiedlicher Dicke zu ermöglichen.

In Weiterführung der Erfindung kann vorgesehen sein, dass das Anschlagelement an der Aufnahmeseite angeordnet ist. Durch das Anordnen des Anschlagelementes an der Aufnahmeseite wird die Achse, um die das längliche Stückgut während der Drehung der Scheiben kippt, in der Nähe der Aufnahmeseite festgelegt, wodurch sichergestellt wird, dass sich der Massenmittelpunkt des länglichen Stückgutes bei der Kippbewegung in Richtung der Achse der Welle bewegt. Dies verringert die Neigung des länglichen Stückgutes, aus der randoffenen Ausnehmung zu springen.

Gemäß einer anderen Ausführungsform der Erfindung kann vorgesehen sein, dass das Anschlagelement ein Unterstützungselement umfasst, wobei das Unterstützungselement von einer ersten Stellung, bei der das Unterstützungselement im wesentlichen die randoffene Ausnehmung freigebend entlang der Aufnahmeseite angeordnet ist, in eine zweite Stellung, bei der das Unterstützungselement zumindest teilweise in der randoffenen Ausnehmung angeordnet ist, verschwenkbar ist. Durch das Unterstützungselement kann die Führung des länglichen Stückgutes während der Kippbewegung weiter verbessert werden, wobei das Unterstützungselement auch in der gekippten Lage des länglichen Stückgutes dessen Bewegungsfreiheit einschränkt und dadurch ein zuverlässiges Wenden verbessert.

In diesem Zusammenhang kann in Weiterbildung der Erfindung vorgesehen sein, dass das Anschlagelement eine zu der der randoffenen Ausnehmung in der ersten Stellung zugewandten Seite des Unterstützungselements im wesentlichen im rechten Winkel angeordnete Anschlagkante und/oder Anschlagfläche aufweist.

Gemäß einer weiteren Ausgestaltung der Erfindung kann vorgesehen sein, dass in jeder der randoffenen Ausnehmungen jeweils eines der Anschlagelemente angeordnet ist, wodurch die Führung der länglichen Stückgüter beim Wenden weiter verbessert werden kann.

Die Erfindung wird unter Bezugnahme auf die beigeschlossenen Zeichnungen, in welchen Ausführungsformen dargestellt sind, näher beschrieben. Dabei zeigt:
Fig. 1 die Seitenansicht einer Ausführungsform einer erfindungsgemäßen Wendevorrichtung und einer Transportvorrichtung im Quertransport;
Fig. 2 die Seitenansicht einer ersten Ausführungsform der Scheibe der erfindungsgemäßen Wendevorrichtung;
Fig. 3 die Seitenansicht einer zweiten Ausführungsform der Scheibe der erfindungsgemäßen Wendevorrichtung;
Fig. 4 die Seitenansicht einer dritten Ausführungsform der Scheibe der erfindungsgemäßen Wendevorrichtung;
Fig. 5 bis 10 die Seitenansicht der Scheibe gemäß Fig. 4 in verschiedenen Positionen während der Drehung der Scheibe; und
Fig. 11 eine Schrägansicht auf eine Ausführungsform der erfindungsgemäßen Wendevorrichtung und einer Transportvorrichtung im Quertransport.

In Fig. 11 ist schematisch eine Schrägansicht auf eine Wendevorrichtung für längliches Stückgut 4, insbesondere Holzbretter, Holzbalken od. dgl., mit einer antreibbaren Welle 11 und zwei mit der Welle 11 drehfest verbundenen Scheiben 13, wobei jede der Scheiben 13 wenigstens eine eine Aufnahmeseite 15 und eine Abgabeseite 16 aufweisende randoffene Ausnehmung 14 für die Aufnahme und/oder Abgabe des Stückgutes 4 aufweist, wobei in einer der randoffenen Ausnehmungen 14 ein Anschlagelement 2 vorgesehen ist.

In anderen Ausführungsformen der erfindungsgemäßen Wendevorrichtung können auch drei oder mehr Scheiben 13 vorgesehen sein. Ebenso kann die Anzahl der randoffenen Ausnehmungen 14 der einzelnen Ausführungsformen unterschiedlich sein, wobei jedoch jede der Scheiben 13 zumindest eine randoffene Ausnehmung 14 aufweist. Weiters können die Anschlagelemente 2 in einer der Scheiben 13, in mehreren der Scheiben 13 oder in allen Scheiben 13 vorgesehen sein.

Die in Fig. 11 gezeigte erfindungsgemäße Wendevorrichtung wirkt mit einer Transportvorrichtung 3 im Quertransport zusammen, wobei der Pfeil T die Transportrichtung der Transportvorrichtung 3 angibt. Der Pfeil D gibt die Drehrichtung der erfindungsgemäßen Wendevorrichtung an. Dabei werden die Welle 11 und die Scheiben 13 um die Drehachse 12 der Welle gedreht.

Bei dem Wendevorgang wird das Stückgut 4 in Transportrichtung T von der Transportvorrichtung 3 in die randoffene Ausnehmung 14 der Scheiben 13 bis zum Anschlag an dem Anschlagelement 2 gebracht, durch die Drehung der Scheiben 13 in Richtung des Pfeiles D wird das Stückgut 4 von der Transportvorrichtung 3 abgehoben. Dabei liegt das Stückgut 4 auf der Aufnahmeseite 15 der randoffenen Ausnehmung 14 auf und wird von dem Anschlagelement 2 gehalten. Während der Drehung der Scheibe 13 kippt das Stückgut 4, wobei das Anschlagelement 2 eine Führung der Kippbewegung sicherstellt, und liegt anschließend auf der Abgabeseite 16 der randoffenen Ausnehmung 14 auf. In weiterer Folge wird das Stückgut 4 auf die Transportvorrichtung 3 abgelegt und von dieser aus der randoffenen Ausnehmung 14 transportiert.

Eine hinreichende Positionierung des Stückgutes 4 auf der Transportvorrichtung 3 kann sichergestellt werden, wenn die Transportvorrichtung 3 Mitnehmer 31 aufweist. Bei dem Transport des Stückgutes in die randoffene Ausnehmung 14 der Scheibe 13 ist das Stückgut 4 vorteilhafterweise unmittelbar hinter den Mitnehmern 31 angeordnet. Dies kann z.B. durch den Einsatz eines Beschleunigungsförderers erreicht werden, der eine höhere Geschwindigkeit als die Transportvorrichtung 3 aufweist. Die Anordnung unmittelbar hinter den Mitnehmern 31 stellt sicher, daß die nachfolgenden Mitnehmer 31 bei der Anhebung des Stückgutes 4 durch die Scheiben 13 nicht mit dem Stückgut 4 in Kontakt kommen können. Bei dem Abtransport des Stückgutes 4 aus der randoffenen Ausnehmung 14 gewährleisten die Mitnehmer 31 den Transport des Stückgutes, wodurch ein unerwünschter Kontakt der Aufnahmeseite 15 mit dem Stückgut 4 nach dem Wenden wirksam vermieden werden kann. Durch die Positionierung des Stückgutes 4 auf der Transportvorrichtung 3 mittels der Mitnehmer 31 kann die Aufnahme und die Abgabe des Stückgutes 4 durch die erfindungsgemäße Wendevorrichtung vorbestimmt werden und ein kontinuierlicher Betrieb der Wendevorrichtung und der Transportvorrichtung 3 sichergestellt werden.

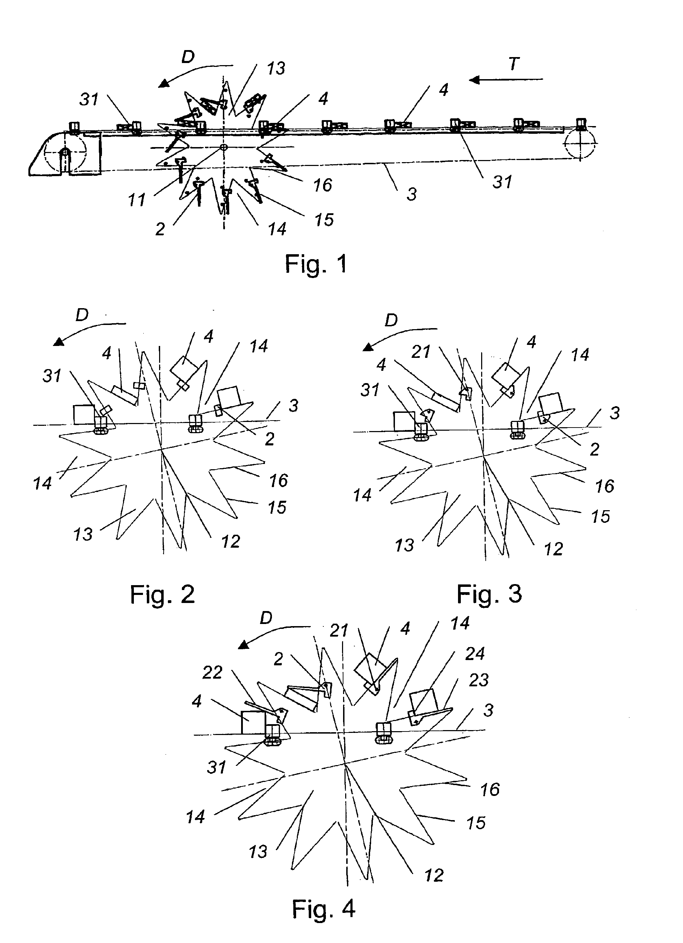

In Fig. 1 ist die Seitenansicht einer anderen Ausführungsform der erfindungsgemäßen Wendevorrichtung und einer Transportvorrichtung 3 gezeigt. Es erscheint vorteilhaft, wenn die Welle 11 der Wendevorrichtung unterhalb der Transportebene der Transportvorrichtung 2 angeordnet ist. Dadurch kann die Scheibe 13 als Stern ausgebildet werden, wobei die Aufnahmeseite 15 während der Aufnahme im wesentlichen parallel zur Transportebene der Transportvorrichtung 3 und die Abgabeseite 16 während der Abgabe im wesentlichen parallel zur Transportebene der Transportvorrichtung ausgerichtet sind.

In Fig. 2 ist eine erste Ausführungsform der Scheibe 13 dargestellt, wobei nur im oberen Bereich in den randoffenen Ausnehmungen 14 Anschlagelemente 2 eingezeichnet sind. Es kann vorgesehen sein, daß in einem, einigen oder in allen der randoffenen Ausnehmungen 14 jeweils ein Anschlagelement 2 vorgesehen ist.

Als günstig hat es sich erwiesen, wenn das Anschlagelement 2 an der Aufnahmeseite 15 angeordnet ist und fest mit dieser verbunden ist. Durch diese Ausführung wird sichergestellt, daß die Achse, um die das Stückgut 4 während der Drehung kippt, im Bereich der Aufnahmeseite 15 angeordnet ist, wodurch der Massenmittelpunkt des Stückgutes 4 während der Kippbewegung in Richtung der Achse 11 der Welle 12 bewegt wird. Diese Bewegung erhöht die Sicherheit, daß das Stückgut 4 während der Drehung in der randoffenen Ausnehmung 14 verbleibt und nicht aus der randoffenen Ausnehmung 14 springt.

In Fig. 3 ist eine zweite Ausführungsform der Scheibe 13 und der Anschlagelemente 2 dargestellt, wobei die Anschlagelemente 2 jeweils um eine zur Achse 12 der Welle 11 im wesentlichen parallelen Kippachse 21 gegenüber der Scheibe verschwenkbar sind. Diese Ausführungsform stellt sicher, daß die Stückgüter 4 bei der Kippbewegung um die Kippachse 21 kippen. Dadurch kann die Führung der Stückgüter 4 während des Kippens verbessert werden.

In Fig. 4 ist eine dritte Ausführungsform der Scheibe 13 und der Anschlagelemente 2 gezeigt, wobei die Anschlagelemente 2 jeweils um die Kippachse 21 gegenüber der Scheibe 13 verschwenkbar sind und ein Unterstützungselement 22 umfassen. Das Unterstützungselement 22 ist von einer ersten Stellung, bei der das Unterstützungselement 22 im wesentlichen die randoffene Ausnehmung 14 freigebend entlang der Aufnahmeseite 15 angeordnet ist, in eine zweite Stellung verschwenkbar, bei der das Unterstützungselement 22 zumindest teilweise in der randoffenen Ausnehmung 14 angeordnet ist. Die in Fig. 4 rechts dargestellten Unterstützungselemente 22 sind in der ersten Stellung während die beiden links dargestellten Unterstützungselemente 22 jeweils in einer zweiten Stellung sind. Das Unterstützungselement 22 bietet eine weitere Führung bei der Kippbewegung des Stückgutes 4. Weiters stellt es eine Führung für die bereits auf der Abgabeseite 16 aufliegenden Stückgüter 4 bei, wie aus den beiden in Fig. 4 gezeigten Unterstützungselementen 22 ersichtlich ist.

Das Unterstützungselement 22 schränkt die Bewegungsfreiheit des Stückgutes 4 in der randoffenen Ausnehmung 14 nach dem Kippen ein und dämpft Schwingungen des Stückgutes 4, wodurch unerwünschte Bewegungen des Stückgutes 4 relativ zur Scheibe 13 vermindert werden.

Weisen die Stückgüter 4 einen im wesentlichen rechteckigen Querschnitt auf, so erscheint es vorteilhaft, wenn das Anschlagelement 2 eine zu der der randoffenen Ausnehmung in der ersten Stellung zugewandten Seite 23 des Unterstützungselementes 22 im wesentlichen im rechten Winkel angeordnete Anschlagkante 24 und/oder Anschlagfläche aufweist. Durch diese Ausführungsform kann eine besonders gute Führung des Stückgutes 4 während der Kippbewegung erreicht werden.

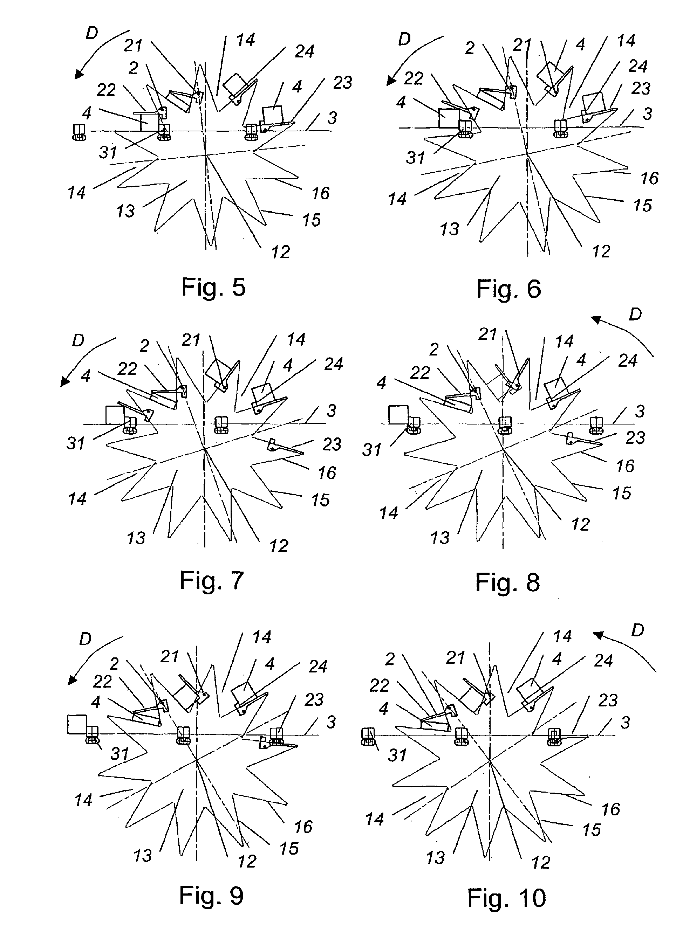

In den Fig. 5 bis 10 ist die Scheibe gemäß Fig. 4 in unterschiedlichen Stellungen während der Drehung dargestellt.

Aufgrund des Anschlagelementes 2 kann ein hoher Durchsatz mit der erfindungsgemäßen Wendevorrichtung erreicht werden.

## Patentansprüche

1. Wendevorrichtung für längliches Stückgut (4), insbesondere Holzbretter, Holzbalken od. dgl., mit einer antreibbaren Welle (11) und wenigstens zwei mit der Welle (11) drehfest verbundenen Scheiben (13), wobei jede der Scheiben (13) wenigstens eine eine Aufnahmeseite (15) und eine Abgabeseite (16) aufweisende randoffene Ausnehmung (14) für die Aufnahme und/oder Abgabe des Stückgutes (4) aufweist und in zumindest einer der randoffenen Ausnehmungen (14) ein Anschlagelement (2) vorgesehen ist, **dadurch gekennzeichnet, dass** das Anschlagelement (2) um eine zur Achse (12) der Welle (11) im wesentlichen parallelen Kippachse (21) gegenüber der Scheibe (13) verschwenkbar ist, wobei das Anschlagelement (2), bei einer Drehung der Wendevorrichtung um die Achse (12) der Welle (11), das Kippen des Stückguts (4) um die Kippachse (21), durch eine Bewegung des Massenmittelpunktes des Stückgutes (4) in Richtung der Achse (11) der Welle (12), gewährleistet.

2. Wendevorrichtung nach Anspruch 1, **dadurch gekennzeichnet, dass** das Anschlagelement (2) an der Aufnahmeseite (15) angeordnet ist.

3. Wendevorrichtung nach Anspruch 2, **dadurch gekennzeichnet, dass** das Anschlagelement (2) ein Unterstützungselement (22) umfasst, wobei das Unterstützungselement (22) von einer ersten Stellung, bei der das Unterstützungselement (22) im wesentlichen die randoffene Ausnehmung (14) freigebend entlang der Aufnahmeseite (15) angeordnet ist, in eine zweite Stellung, bei der das Unterstützungselement (22) zumindest teilweise in der randoffenen Ausnehmung (14) angeordnet ist, verschwenkbar ist.

4. Wendevorrichtung nach Anspruch 3, **dadurch gekennzeichnet, dass** das Anschlagelement (2) eine zu der der randoffenen Ausnehmung (14) in der ersten Stellung zugewandten Seite (23) des Unterstützungselements (22) im wesentlichen im rechten Winkel angeordnete Anschlagkante (24) und/oder Anschlagfläche aufweist.

5. Wendevorrichtung nach einem der Ansprüche 1 bis 4, **dadurch gekennzeichnet, dass** in jeder der randoffenen Ausnehmungen (14) jeweils eines der Anschlagelemente (2) angeordnet ist.

## Claims

1. A turning apparatus for oblong piece goods (4), especially wooden boards, wooden beams or the like, with a drivable shaft (11) and at least two disks (13) which are joined to the shaft (11) in a torsionally rigid manner, with each of the disks (13) comprising at least one recess (14) for receiving and/or delivering the piece good (4), which recess comprises a receiving side (15) and a delivery side (16) and is open around the edges, and with stop element (2) being provided in at least one of the recesses (14) open around the edges, **characterized in that** the stop element (2) can be swiveled relative to the disk (13) about a tilting axis (21) which is substantially parallel to the axis (12) of the shaft (11), with the stop element (2) ensuring the tilting of the piece good (4) about the tilting axis (21) by a movement of the center of mass of the piece good (4) in the direction of the axis (12) of the shaft (11) during a turning of the turning apparatus about the axis (12) of the shaft (11).

2. A turning apparatus according to claim 1, **characterized in that** the stop element (2) is arranged on the receiving side (15).

3. A turning apparatus according to claim 2, **characterized in that** the stop clement (2) comprises a support element (22), with the support element (22) being able to be swiveled from a first position in which the support element (22) is substantially arranged along the receiving side (15) by releasing the recess (14) with the open edge to a second position in which the support element (22) is arranged partly in the recess (14) with the open edge.

4. A turning apparatus according to claim 3, **characterized in that** the stop element (2) comprises a stop edge (24) and/or stop face arranged substantially at a right angle to the side (23) of the support element (22) facing the recess (14) with the open edge in the first position.

5. A turning apparatus according to one of the claims 1 to 4, **characterized in that** one each of the stop elements (2) is arranged in each of the recesses (14) with the open edge.

## Revendications

1. Dispositif de retournement pour des produits unitaires allongés (4), en particulier des planches en bois, poutres en bois ou similaires, avec un arbre (11) pouvant être entraîné et au moins deux disques (13) solidaires en rotation de l'arbre (11), chacun des disques (13) présentant au moins un évidement (14) ouvert sur le bord comportant un côté de ramassage (15) et un côté de dépose (16) pour ramasser et/ou déposer le produit unitaire allongé (4) et un élément de butée (2) étant prévu dans l'un au moins des évidements (14) ouverts sur le bord, **caractérisé en ce que** l'élément de butée (2) peut pivoter autour d'un axe de pivotement (21) sensiblement parallèle à l'axe (12) de l'arbre (11) par rapport au disque (13), l'élément de butée (2) garantissant, lors d'une rotation du dispositif de retournement autour de l'axe (12) de l'arbre (11), le basculement du produit unitaire (4) autour de l'axe de pivotement (21), par un déplacement du centre de gravité du produit unitaire (4) en direction de l'axe (11) de l'arbre (12).

2. Dispositif de retournement selon la revendication 1, **caractérisé en ce que** l'élément de butée (2) est disposé sur le côté de ramassage (15).

3. Dispositif de retournement selon la revendication 2, **caractérisé en ce que** l'élément de butée (2) comprend un élément de support (22), lequel élément de support (22) peut pivoter entre une première position dans laquelle l'élément de support (22) est disposé le long du côté de ramassage (15) en libérant pour l'essentiel l'évidement (14) ouvert sur le bord et une deuxième position dans laquelle l'élément de support (22) est disposé au moins partiellement dans l'évidement (14) ouvert sur le bord.

4. Dispositif de retournement selon la revendication 3, **caractérisé en ce que** l'élément de butée (2) présente un bord de butée (24) et/ou une surface de butée disposés sensiblement à angle droit par rapport au côté (23) de l'élément de support (22) tourné vers l'évidement (14) ouvert sur le bord dans la première position.

5. Dispositif de retournement selon l'une quelconque des revendications 1 à 4, **caractérisé en ce qu'**un des éléments de butée (2) est disposé dans chacun des évidements (14) ouverts sur le bord.
